Europäisches Patentamt

European Patent Office

Office européen des brevets

(11) Veröffentlichungsnummer: **0 288 985 B1**

(12) **EUROPÄISCHE PATENTSCHRIFT**

(45) Veröffentlichungstag der Patentschrift: **29.07.92**

(51) Int. Cl.⁵: **G01G 3/14**, G01L 1/22

(21) Anmeldenummer: **88106706.0**

(22) Anmeldetag: **27.04.88**

(54) **Biegering-Wägezelle.**

(30) Priorität: **01.05.87 DE 3714613**

(43) Veröffentlichungstag der Anmeldung:
**02.11.88 Patentblatt 88/44**

(45) Bekanntmachung des Hinweises auf die
Patenterteilung:
**29.07.92 Patentblatt 92/31**

(84) Benannte Vertragsstaaten:
**AT BE CH DE ES FR GB GR IT LI LU NL SE**

(56) Entgegenhaltungen:
**EP-A- 0 106 900       DE-A- 2 555 231**
**DE-C- 905 550         FR-A- 2 235 362**
**SU-A- 1 384 970       SU-A- 1 418 583**

**Weighing & Measurement Februar 1987 Seiten 19, 20, 22**

(73) Patentinhaber: **GTM GASSMANN THEISS MESSTECHNIK GMBH**
**Friedrich-Ebert-Strasse 37**
**W-6104 Seeheim-Jugenheim(DE)**

(72) Erfinder: **Gassmann, Helmut, Dr.**
**Donnersbergstrasse 3**
**W-6104 Seeheim-Jugenheim 1(DE)**

(74) Vertreter: **Hennicke, Albrecht, Dipl.-Ing. et al Patentanwälte Dipl.-Ing. Buschhoff Dipl.-Ing. Hennicke Dipl.-Ing. Vollbach Kaiser-Wilhelm-Ring 24 Postfach 190 408**
**W-5000 Köln 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Biegering-Wägezelle mit einem Krafteinleitungselement und einem Kraftaufnahmeelement, die durch Kraftübertragungsglieder mit einem zwischen ihnen angeordneten, ringförmigen Verformungskörper verbunden sind, der auf beiden Seiten seiner radialen Mittelfläche im axialen Abstand voneinander angeordnete, mechanisch-elektrische Wandlerelemente zum Umwandeln mechanischer Verformungen in elektrische Größen aufweist.

Bei Wägezellen dieser Art wird die Größe der eingeleiteten Kraft mit Hilfe der tangentialen Verformungen gemessen, die ein Biegering erleidet, an dessen Innenrand die Last eingeleitet wird und der an seinem Außenrand an einem Kraftaufnahmeelement aufgelagert ist. Die Stauchung bzw. Dehnung von auf gegenüberliegenden Seiten einer Mittelfläche im axialen Abstand voneinander angeordneten Flächen des Ringes bei dessen Biegung werden von den Wandlerelementen aufgenommen und von diesen in elektrische Meßsignale umgewandelt, die in geeigneter Weise verstärkt und sichtbar gemacht werden können.

Es ist eine Wägezelle der eingangs näher erläuterten Art bekannt (DE-PS 12 68 878), bei der die Kraftübertragungsglieder dünnwandige, zylindrische Rohrstücke sind, welche mit ihrem einen Rand mit dem Verformungskörper und mit ihrem anderen Rand mit dem Krafteinleitungselement bzw. dem Kraftaufnahmeelement verbunden sind und die Kraft von diesem auf jenes tangential in Richtung der Mantellinien der zylindrischen Rohrstücke übertragen. Aufgrund der hohen Steifigkeit der rohrförmigen Kraftübertragungsglieder und infolge der komplizierten Verformungen, welche diese Rohrstücke bei der Kraftübertragung erleiden, ergeben sich hohe Einspannmomente. Ferner treten an den Stellen, wo die rohrförmigen Kraftübertragungsglieder in den Verformungskörper übergehen, hohe Spannungsspitzen auf. Diese hohen Spannungen wiederum führen zu unelastischen Verformungen und zu Hysterese-Erscheinungen und haben zur Folge, daß die Meßgenauigkeit leidet.

Es ist ferner eine Wägezelle bekannt (US-Zeitschrift W & M, 1987, S. 19-22), bei der Krafteinleitungselement und Kraftaufnahmeelement durch eine Ringscheibe miteinander verbunden sind, aus der durch Eindrehungen auf der Ober- und Unterseite ein im Querschnitt etwa rechteckiger Verformungskörper herausgearbeitet ist, dessen Höhe der Dicke der Ringscheibe an ihrem Innen- und Außenrand entspricht, wo diese in das Krafteinleitungselement bzw. das ringförmige Kraftaufnahmeelement übergeht. Da die Ringscheibe mit dem Krafteinleitungselement einerseits und dem Kraftaufnahmeelement andererseits biegesteif verbunden ist und Winkelverdrehungen nur im Bereich der Eindrehungen neben dem Verformungskörper möglich sind, werden auf den Verformungskörper und die an ihm befestigten Wandlerelemente Störmomente übertragen, die beispielsweise in einer exzentrischen Einleitung der Last in das Krafteinleitungselement oder in einer exzentrischen Lagerung des Kraftaufnahmeelementes ihre Ursache haben. Diese Störkräfte verändern bereichsweise das auf den Verformungskörper ausgeübte Biegemoment und beeinflussen hierdurch die dort wirksamen, aus der Last herrührenden Tangentialspannungen, was zu einer Verfälschung des Meßergebnisses führt.

Zum Messen von Längenänderungen gibt es Dehnungsmeßelemente (DE-C-905 550), bei denen eine unbiegsame Kreisplatte über Biegegelenke mit senkrecht zur Plattenebene stehenden, glatten oder eingeschnittenen Dehnrändern versehen und mit einem äußeren Stützring verbunden ist. Wirkt eine Verschiebekraft auf die Kreisplatte, so ändern sich die Umfänge der Dehnränder an der Platte, die ein Maß für die Längenänderungen sind, die von auf den Dehnrändern angebrachten Widerstandsdrähten erfaßt werden. Hierbei ist für eine exakte Messung wesentlich, daß die Kreisplatte mit ihren Dehnrändern den Verschiebungskräften einen möglichst geringen Widerstand entgegensetzt, da ein solcher die Meßgenauigkeit des Wegaufnehmers bei kleinen Wegänderungen nachteilig beeinflußt. Für Kraftmessungen ist das bekannte Dehnungsmeßelement nicht geeignet.

Aufgabe der Erfindung ist es, eine Biegering-Wägezelle zu schaffen, die sehr genau arbeitet, mit kleinen Abmessungen und geringen Kosten so hergestellt werden kann, daß Störgrößen bei der Lasteinleitung und bei der Lagerung der Wägezelle nahezu vollständig ausgeschaltet werden.

Diese Aufgabe wird mit der Erfindung dadurch gelöst, daß die Kraftübertragungsglieder schmale, ringförmige, etwa senkrecht zur Krafteinleitungsrichtung angeordnete Stege sind, die aufgrund ihrer Querschnittsform elastische Gelenke bilden. Hierbei ist es zweckmäßig, wenn die kleinste axiale Dicke der Stege höchstens 1/6 der axialen Höhe des Verformungskörpers trägt und wenn die radiale Breite der Stege gemessen im Abstand der kleinsten axialen Dicke von der durch die Stelle der kleinsten axialen Stegdicke gehenden, radialen Mittelfläche der Stege nicht größer ist als 1/3 der zwischen den Stellen der kleinsten axialen Stegdikken gemessenen radialen Breite des Verformungskörpers.

Die schmalen Stege zwischen dem ringförmigen Verformungskörper einerseits und dem Krafteinleitungselement bzw. dem Kraftaufnahmeelement andererseits bilden elastische Gelenke, in denen nur sehr kleine Einspannmomente auftreten können. Es gibt deshalb in diesem Bereich keine unelastischen Verformungen und auch keine Hysterese-Erscheinungen, so daß eine hohe Genauigkeit der Wägezellen gewährleistet ist. Vor allem aber wird erreicht, daß Veränderungen des Ortes der Krafteinleitung in das Krafteinleitungselement oder eine exzentrische Lagerung des Kraftaufnahmeelementes die tangentialen Spannungen des Verformungskörpers und damit die Kraftmessung nicht mehr beeinflussen können.

Eine besonders einfache Bauform und günstige Herstellbedingungen werden erreicht, wenn Krafteinleitungselement, Kraftaufnahmeelement und Verformungskörper aus einem Stück bestehen und die Stege durch Ringnuten begrenzt werden, die zwischen dem Verformungskörper einerseits und dem Krafteinleitungselement bzw. dem Kraftaufnahmeelement andererseits eingearbeitet sind. Der Grundkörper der Wägezelle kann hierdurch als einfaches Drehteil hergestellt werden.

Besonders einfache Formen ergeben sich, wenn die Ringnuten eine im Querschnitt kreisbogenförmige oder parabelförmige Grundfläche haben. Ganz besonders zweckmäßig aber ist es, wenn mindestens eine Ringnute eine im Querschnitt dreieckförmige Grundfläche hat. Wird diese dreieckförmige Ringnute so geformt, daß ihre Scheitellinie sich im Bereich der Nulllinie des im Steg durch die Kraftübertragung erzeugten Spannungsfeldes befindet, gelingt es, die Einspannmomente im Gelenkbereich nahezu zu Null werden zu lassen. In diesem Fall ist die dreieckförmige Ringnute in der Regel asymmetrisch, d.h. ihre Scheitellinie liegt nicht in der Mitte des Nutgrundes.

Weitere Merkmale und Vorteile der Erfindung ergeben sich aus der nachfolgenden Beschreibung und den Zeichnungen, in denen bevorzugte Ausführungsformen der Erfindung an schematischen Beispielen näher erläutert sind. Es zeigt:

Fig. 1 eine Wägezelle nach der Erfindung in einer schematischen Darstellung im Querschnitt,

Fig. 2 eine andere Ausführungsform einer erfindungsgemäßen Wägezelle, die für höhere Lasten bestimmt ist, in einer der Fig. 1 entsprechenden Darstellung,

Fig. 3 eine Einzelheit der Fig. 1, welche die Ausbildung des elastischen Gelenkes zwischen Verformungskörper und Kraftaufnahmeelement erkennen läßt, in stark vergrößertem Maßstab,

Fig. 4 eine andere Ausführungsform eines elastischen Gelenkes in einer der Fig. 3 entsprechenden Darstellung,

Fig. 5 eine dritte Ausführungsform des elastischen Gelenkes in einer der Fig. 3 entsprechenden Ausführungsform und

Fig. 6 eine schematische Darstellung eines als Verformungskörper dienenden Biegeringes in verformtem und unverformtem Zustand im Diametralschnitt.

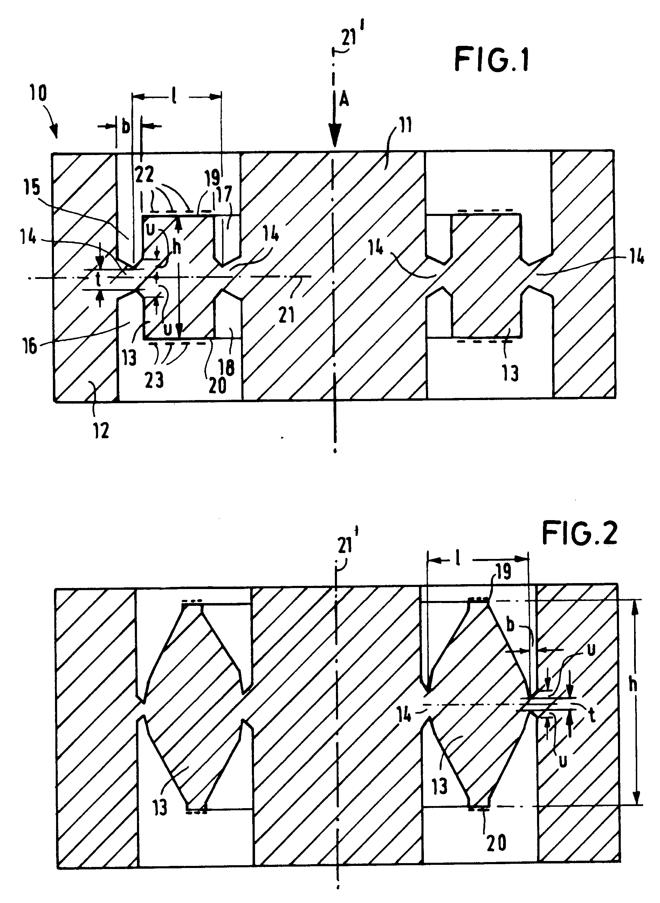

In Fig. 1 ist mit 10 eine Wägezelle bezeichnet, die aus einem einstückigen Zylinderblock herausgearbeitet ist und aus einem zentralen Krafteinleitungselement 11, einem äußeren, ringförmigen Kraftaufnahmeelement 12 und einem ringförmigen Verformungskörper 13 besteht, der in dem Ringraum zwischen Krafteinleitungselement 11 und Kraftaufnahmeelement 12 angeordnet und mit diesen Elementen durch Kraftübertragungsglieder 14 verbunden ist. Diese Kraftübertragungsglieder sind schmale, ringförmige Stege, die durch Einarbeiten von Ringnuten 15 und 16 bzw. 17 und 18 zwischen dem Verformungskörper 13 einerseits und dem Kraftaufnahmeelement 12 bzw. dem Krafteinleitungselement 11 andererseits gebildet sind.

Der ringförmige Verformungskörper 13 kann verschiedene Querschnittsformen und je nach Größe der zu übertragenden Last verschiedene Höhen haben. Bei der in Fig. 1 dargestellten Ausführungsform ist der Verformungskörper 13 ein im Querschnitt rechteckiger Biegering, dessen Höhe $\bar{h}$ größer ist als seine radial gemessene Breite $\bar{l}$ und dessen obere Ringfläche 19 und dessen untere Ringfläche 20 sich im gleichen axialen Abstand von der Mittelfläche 21 des Ringes befinden, die durch die Stege 14 geht, welche den Verformungskörper 13 mit dem Krafteinleitungselement 11 und dem Kraftaufnahmeelement 12 verbinden.

Auf der oberen Ringfläche 19 und der unteren Ringfläche 20, die bei dem dargestellten Ausführungsbeispiel zueinander parallel sind und senkrecht zur Mittelachse 21' der Wägezelle verlaufen, aber auch zu dieser Achse geneigt sein können, sind mechanisch-elektrisch Wandlerelemente 22 bzw. 23 befestigt, die beispielsweise über den Ring verteilt angeordnete Dehnungsmeßstreifen sein können, vorzugsweise jedoch Meßdrahtspiralen sind, die auf ihrer ganzen Länge mit der oberen bzw. unteren Ringfläche 19 bzw. 20 fest verbunden, beispielsweise aufgeklebt sind. Die obere und untere Drahtspirale 22 und 23 werden in an sich bekannter Weise in einer Brückenschaltung zusammengefaßt und die von ihnen erzeugten elektrischen Meßsignale werden in einem nicht näher dargestellten Anzeigegerät verarbeitet.

Damit sich der ringförmige Verformungskörper 13 bei der Lastübertragung möglichst zwängungsfrei verbiegen kann und keine störenden Momente eingetragen werden, die aus unsymmetrischer Lasteintragung oder Lagerung der Wägezelle herrühren, sind die ringförmigen Stege 14 so schmal und dünn wie möglich. Nach der Erfindung soll die kleinste Dicke $\bar{t}$ eines jeden Steges nicht mehr als 1/6 der Höhe $\bar{h}$ des Verformungskörpers 13 betragen, wobei als Höhe h des Verformungskörpers der mittlere Abstand der Ringflächen 19 und 20 verstanden wird, auf denen die mechanisch-elektrischen Wandlerelemente 22 und 23 angeordnet sind. Man erkennt ferner aus Fig. 1, daß die Breite b der ringförmigen Stege erheblich kleiner ist als die Breite l des Verformungskörpers 13, die diametral zwischen den Stellen gemessen wird, wo Innensteg und Außensteg ihre kleinste Dicke t haben. Nach der Erfindung soll die Breite b der Stege höchstens 1/3 der Breite l des Verformungskörpers betragen, wobei diese Breite b in einem senkrechten Abstand u von der Mittelfläche 21 des Steges 14 gemessen wird, welcher der kleinsten Stegdicke t entspricht. Werden diese Bedingungen eingehalten, wirken die ringförmigen Stege 14 als elastische Gelenke, in denen nur Querkräfte, aber praktisch keine Biegemomente übertragen werden können.

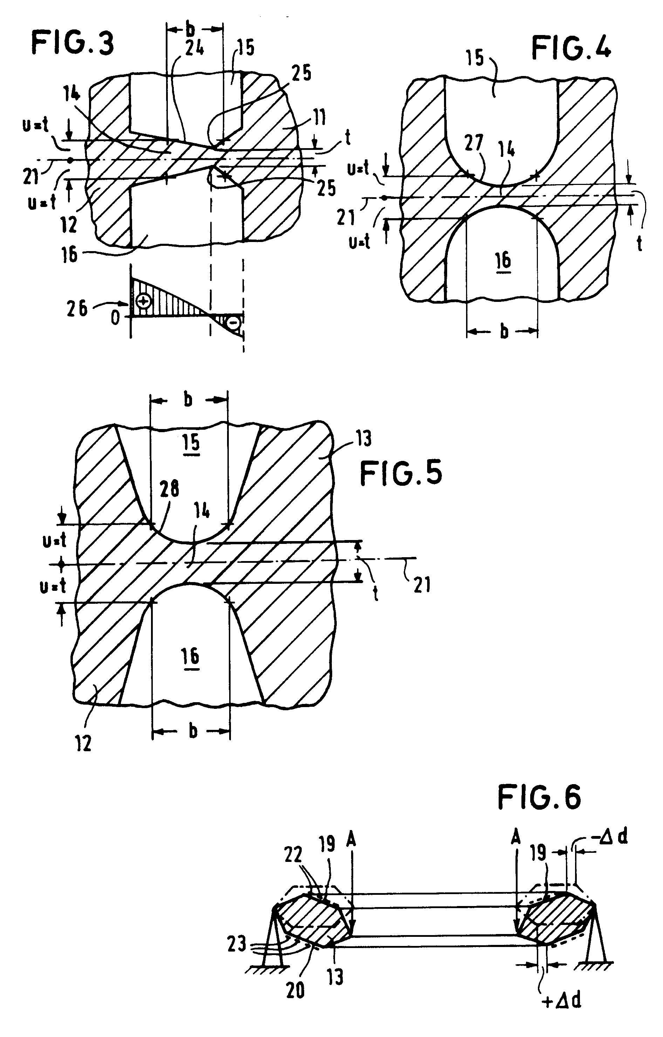

Eine besonders günstige Form des Steges 14 ergibt sich, wenn die einen Steg 14 bildenden, einander gegenüberliegenden oberen und unteren Ringnuten 15 und 16 bzw. 17 und 18 eine im Querschnitt dreieckförmige Grundfläche 24 haben, die so geformt ist, daß ihre Scheitellinie 25 sich im Bereich der Nullinie 0 des im Steg 14 durch die Kraftübertragung erzeugten Spannungsfeldes 26 befindet (Fig. 3).

Andere Ausführungsformen der Stege 14 sind in den Fig. 4 und 5 gezeigt, wo diese Stege von Ringnuten 15 begrenzt werden, die eine im Querschnitt kreisbogenförmige Grundfläche (27 (Fig. 4) oder eine im Querschnitt parabelförmige Grundfläche 28 haben (Fig. 5). Die Breite b der von gekrümmten Flächen begrenzten Stege 14 ist auch hier in einem Abstand u von der Mittelfläche 21 des Steges 14 zu messen, welcher der Stegdicke t entspricht. Werden Oberseite und Unterseite eines Steges 14 von unterschiedlich gestalteten Flächen begrenzt, kann ein Mittelwert aus den oberhalb und unterhalb des Steges 14 im Abstand t von der Mittelfläche 21 gemessenen Breiten b gebildet werden.

In Fig. 2 ist eine etwas andere Ausführungsform einer Wägezelle nach der Erfindung gezeigt, bei der der Verformungskörper einen etwa rautenförmigen Querschnitt hat. Die obere Ringfläche 19 und die untere Ringfläche 20 befinden sich hier in einem größeren axialen Abstand voneinander, haben aber im Verhältnis zur Höhe h eine kleine radiale Breite. Auch hier sind die ringförmigen Stege 14 im Verhältnis zur Gesamtbreite l des Verformungskörpers 13 sehr schmal und ihre Dicke t ist ebenfalls sehr klein im Verhältnis zur Höhe h des Verformungskörpers. Wägezellen dieser Ausbildung eignen sich besonders zum Messen großer Kräfte bzw. zum Wiegen hoher Lasten.

Die Wirkungsweise der Wägezelle nach der Erfindung wird anhand der Fig. 1 und 6 näher erläutert:

Wirkt auf das Krafteinleitungselement eine Last A, wird diese über den inneren, ringförmigen Steg 14 auf den Verformungskörper 13 übertragen. Da dieser über den äußeren, ringförmigen Steg 14 mit dem Kraftaufnahmeelement 12 verbunden ist und hierdurch an seinem äußeren Umfang in seiner Lage gehalten wird, verbiegt sich der Verformungskörper 13 und gelangt in die in Fig. 6 schraffierte und in ausgezogenen Linien dargestellte Lage, in der sich die obere Ringfläche 19 um das Maß $-\Delta d$ nach innen und die untere Ringfläche 20 des Verformungskörpers 13 um das Maß $+\Delta d$ nach außen bewegt hat. Die obere Ringfläche 19 ist also kleiner geworden, während die untere Ringfläche größer geworden ist. Die obere Ringfläche wurde also in tangentialer Richtung gestaucht, während die untere Ringfläche 20 in tangentialer Richtung gedehnt wurde. Diese tangentiale Stauchung bzw. Dehnung der oberen und unteren Ringflächen wird auf die hiermit fest verbundenen mechanisch-elektrischen Wandlerelemente übertragen, die hierdurch ein der Dehnung bzw. Stauchung proportionales elektrisches Signal abgeben, das als Maß der übertragenen Kraft angezeigt werden kann.

Die Erfindung ist nicht auf die dargestellten und beschriebenen Ausführungsbeispiele beschränkt, sondern es sind mehrere Änderungen und Ergänzungen möglich, ohne den Rahmen der Erfindung zu verlassen. Beispielsweise kann die Querschnittsform des als Verformungskörper dienenden Biegeringes auch kreisförmig, elliptisch oder sechseckig sein. Es ist auch möglich, die Ringflächen, auf denen die mechanisch-elektrischen Wandlerelemente angeordnet sind, im Inneren des Verformungskörpers anzuordnen oder diese Ringflächen zur Mittelachse der Wägezelle geneigt auszubilden. Auch die Form der Ringnuten, welche die ringförmigen Stege begrenzen, können anders, beispielseise trapezförmig geformt sein. Außerdem kann der innere Stegring gegenüber dem äußeren Stegring in Richtung der in das Krafteinleitungselement einzuleitenden Kraft axial versetzt angeordnet sein, obgleich es in der Regel zweckmäßiger ist, beide Stegringe in der gleichen Diametralebene des Verformungskörpers anzuordnen.

**Patentansprüche**

1. Biegering-Wägezelle mit einem Krafteinleitungselement (11) und einem Kraftaufnahmeelement (12), die durch Kraftübertragungsglieder (14) mit einem zwischen ihnen angeordneten, ringförmigen Verformungskörper (13) verbunden sind, der auf beiden Seiten seiner radialen Mittelfläche (21) im axialen Abstand voneinander angeordnete, mechanisch-elektrische Wandlerelemente (22, 23) zum Umwandeln mechanischer Verformungen in elektrische Größen aufweist, **dadurch gekennzeichnet,** daß die Kraftübertragungsglieder schmale, ringförmige, etwa senkrecht zur Krafteinleitungsrichtung angeordnete Stege (14) sind, die aufgrund ihrer Querschnittsform elastische Gelenke bilden.

2. Wägezelle nach Anspruch 1, **dadurch gekennzeichnet,** daß die kleinste axiale Dicke (t) der Stege (14) höchstens ein Sechstel der axialen Höhe (h) des Verformungskörpers (13) beträgt und daß die radiale Breite (b) der Stege (14), gemessen im Abstand der kleinsten axialen Dicke von der durch die Stelle der kleinsten axialen Stegdicke gehenden, radialen Mittelfläche (21) der Stege (14), nicht größer ist als ein Drittel der zwischen den Stellen der kleinsten axialen Stegdicken gemessenen radialen Breite (l) des Verformungskörpers (13).

3. Wägezelle nach Anspruch 1 oder 2**, dadurch gekennzeichnet,** daß die Stege (14) im Bereich der Mittelfläche (21) des Verformungskörpers (13) diametral einander gegenüberliegend angeordnet sind.

4. Wägezelle nach einem der Ansprüche 1 bis 3, **dadurch gekennzeichnet,** daß Krafteinleitungselement (11), Kraftaufnahmeelement (12) und Verformungskörper (13) aus einem Stück bestehen und die Stege (14) durch Ringnuten (15, 16 bzw. 17, 18) begrenzt werden, die zwischen dem Verformungskörper (13) einerseits und dem Krafteinleitungselement (11) bzw. dem Kraftaufnahmeelement (12) andererseits eingearbeitet sind.

5. Wägezelle nach einem der Ansprüche 1 bis 4, **dadurch gekennzeichnet,** daß mindestens eine Ringnute (15, 16 bzw. 17, 18) eine im Querschnitt kreisbogenförmigen Grundfläche (27) hat.

6. Wägezelle nach einem der Ansprüche 1 bis 5, **dadurch gekennzeichnet,** daß mindestens eine Ringnute (15 bis 18) eine im Querschnitt parabelförmige Grundfläche (28) hat.

7. Wägezelle nach einem der Ansprüche 1 bis 4, **dadurch gekennzeichnet,** daß mindestens eine Ringnute (15, 16, 17, 18) eine im Querschnitt dreieckförmige Grundfläche (24) hat.

8. Wägezelle nach einem der Ansprüche 1 bis 7, **dadurch gekennzeichnet,** daß die dreieckförmigen Ringnuten (15, 16, 17, 18) so geformt sind, daß ihre Scheitellinien (25) sich im Bereich der Nullinien (0) der in den Stegen (14) durch die Kraftübertragung erzeugten Spannungsfelder (26) befinden.

**Claims**

1. A bending-ring load cell with a force introduction element (11) and a force absorption element (12) which are attached to an annular deformation body (13) disposed between them via force transmission members (14), which deformation body has electromechanical transducer elements (22, 23) disposed on both sides of its central radial surface (21) at an axial distance from each other for converting mechanical deformations into electrical quantities, characterised in that the force transmission members are narrow, annular webs (14) approximately perpendicular to the direction of introduction of the force, which form elastic links due to the shape of their cross-section.

2. A load cell according to Claim 1, characterised in that the smallest axial thickness (t) of the webs (14) is a maximum of one sixth of the axial height (h) of the deformation body (13), and that the radial width (b) of the webs (14), measured at the distance of the smallest axial thickness from the central, radial surface which passes through the smallest axial web thickness, is not greater than one third of the radial width (l) of the deformation body (13), measured between the positions of the smallest axial web thicknesses.

3. A load cell according to Claims 1 or 2, characterised in that the webs (14) are arranged diametrically opposite each other in the region of the central surface (21) of the deformation body (13).

4. A load cell according to any one of Claims 1 to 3, characterised in that the force introduction element (11), the force absorption element (12) and the deformation body (13) comprise one piece, and the webs (14) are bounded by annular grooves (15, 16 or 17, 18) which are formed between the deformation body (13) on one side and the force introduction element (11) or the force absorption element (12) on the other side.

5. A load cell according to any one of Claims 1 to 4, characterised in that at least one annular groove (15, 16 or 17, 18) has a bottom surface (27) which is shaped as an arc of a circle in cross-section.

6. A load cell according to any one of Claims 1 to 4, characterised in that at least one annular groove (15 to 18) has a bottom surface (28) which is shaped as a parabola in cross-section.

7. A load cell according to any one of Claims 1 to 4, characterised in that at least one annular groove (15, 16, 17, 18) has a bottom surface (24) which has a triangular shape in cross-section.

8. A load cell according to any one of Claims 1 to 7, characterised in that the triangular-shaped annular grooves (15, 16, 17, 18) are formed so that their apex lines (25) are located in the region of the zero lines (0) of the stress fields (26) produced in the webs due to the transmission of force.

**Revendications**

1. Cellule de pesage à anneau de flexion comportant un élément de transmission des forces (11) et un élément d'absorption des forces (12) qui sont reliés, par des organes de transmission des forces (14), avec un corps déformable (13) annulaire, placé entre eux, lequel comporte, de part et d'autre de sa surface centrale radiale (21), des éléments convertisseurs (22, 23) électromécaniques, espacés axialement l'un de l'autre, pour convertir des déformations mécaniques en grandeurs électriques, caractérisée en ce que les organes de transmission des forces sont des nervures (14) étroites, annulaires, disposées sensiblement perpendiculairement à la direction de transmission des forces, qui forment des articulations élastiques du fait de la forme de leur section transversale.

2. Cellule de pesage selon la revendication 1, caractérisée en ce que la plus petite épaisseur axiale (t) des nervures (14) est au plus égale à un sixième de la hauteur axiale (h) du corps déformable (13) et en ce que la largeur radiale (b) des nervures (14), mesurée à distance de la plus petite épaisseur axiale par rapport à la surface centrale radiale (21) des nervures (14), passant par le point de la plus petite épaisseur axiale de nervure, n'est pas supérieure à un tiers de la largeur radiale (l) du corps déformable (13), mesurée entre les points des plus petites épaisseurs axiales de nervure.

3. Cellule de pesage selon la revendication 1 ou 2, caractérisée en ce que les nervures (14) dans la région de la surface centrale (21) du corps déformable (13) sont diamétralement opposées les unes aux autres.

4. Cellule de pesage selon l'une des revendications 1 à 3, caractérisée en ce que l'élément de transmission des forces (11), l'élément d'absorption des forces (12) et le corps déformable (13) sont réalisés d'une seule pièce et les nervures (14) sont délimitées par des rainures annulaires (15, 16 ou 17, 18) qui sont pratiquées entre le corps déformable (13) d'une part et l'élément de transmission des forces (11) ou l'élément d'absorption des forces (12) d'autre part.

5. Cellule de pesage selon l'une des revendications 1 à 4, caractérisée en ce qu'au moins une rainure annulaire (15, 16 ou 17, 18) possède une surface de base (27) de section transversale en arc de cercle.

6. Cellule de pesage selon l'une des revendications 1 à 5, caractérisée en ce qu'au moins une rainure annulaire (15 à 18) possède une surface de base (28) de section transversale parabolique.

7. Cellule de pesage selon l'une des revendications 1 à 4, caractérisée en ce qu'au moins une rainure annulaire (15, 16, 17, 18) possède une surface de base (24) de section transversale triangulaire.

8. Cellule de pesage selon l'une des revendications 1 à 7, caractérisée en ce que les rainures annulaires triangulaires (15, 16, 17, 18) ont une forme telle que leurs lignes de sommet (25) se trouvent dans la région des lignes zéro (0) des champs de tension (26) engendrés dans les nervures (14) par la transmission des forces.

FIG.1

FIG.2

FIG.3

FIG.4

FIG.5

FIG.6